# EUROPEAN PATENT SPECIFICATION

(11) **EP 1 737 154 B1**
(45) Date of publication and mention of the grant of the patent: **21.05.2008**
(21) Application number: 06705733.1
(22) Date of filing: 09.03.2006
(51) Int. Cl.: H04L 29/06, H04N 7/173, H04L 12/18, H04L 12/28, H04J 14/02

(54) **TRANSMISSION METHOD FOR ETHERNET SERVICE SIGNAL IN A WAVELENGTH DIVISION MULTIPLEXING NETWORK**
ÜBERTRAGUNGSVERFAHREN FÜR ETHERNET-DIENSTSIGNALE IN EINEM WELLENLÄNGENMULTIPLEXNETZWERK
PROCEDE DE TRANSMISSION POUR SIGNAUX DE SERVICE ETHERNET DANS UN RESEAU À MULTIPLEXAGE PAR DIVISION DE LONGUEURS D'ONDES

(30) Priority: 09.03.2005 CN 200510053621
(43) Date of publication of application: 27.12.2006
(73) Proprietor: Huawei Technologies Co., Ltd., Longgang District, Shenzhen Guangdong 518129 (CN)
(72) Inventor: LI, Weishi, Huawei Administration Bld., Guangdong 518129 (CN); XIONG, Qianjin, Huawei Administration Bld., Guangdong 518129 (CN); ZHANG, Jianmei, Huawei Administration Bld., Guangdong 518129 (CN); XIAO, Dianjun, Huawei Administration Bld., Guangdong 518129 (CN)
(74) Representative: Skuhra, Udo
(86) International application number: PCT/CN2006/000356
(87) International publication number: WO 2006/094461

(56) References cited:
- EP-A- 1 220 542
- EP-A2- 1 505 753
- WO-A-02/21837
- CN-A- 1 392 684

## Description

### Field of the Technology

The present invention relates to Wavelength Division Multiplexing (WDM) networks. More particularly, the invention provides a method and processing devices for transmitting Ethernet service signals in the WDM network.

### Background of the Invention

With the development of IP technologies and the developing trend towards IP, more and more subscribers and operators adopt large amounts of large granularity services, e.g. implementing broadband data interconnections through 10M/100M Fast Ethernet (FE), Gigabit Ethernet (GE), 10 GE and other channels. Interfaces of large granularity services, e.g. GE interfaces, have become the mainstream interfaces of metropolitan broadband data service interconnections. Facing the ever emerging large amounts of GE interconnections, it is becoming more and more important to efficiently solve the transmission problem and to create a manageable and operationable telecommunication-level metropolitan network with low cost and guaranteed Quality of Service (QOS).

At present, one increasingly profitable area of the broadband services is Internet Protocol TV (IPTV) services, which is also called network TV or broadband TV, the IPTV provides interactive multimedia services for the subscribers by the broadband networks.

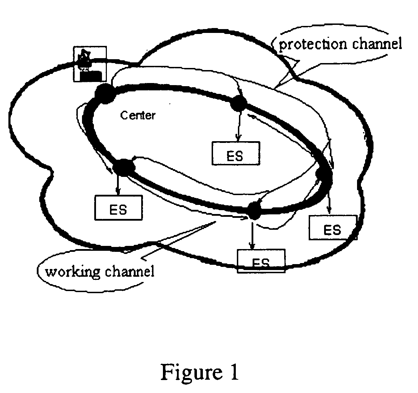

The IPTV includes multiple services, but are divided into unicast service and multicast service in terms of the service flow type. Figure 1 is a schematic diagram illustrating the transmission of a drop and continue service required by the IPTV. When the service from a Center Server (CS) of TV programs need to be multicast to downstream stations, the service will be sent all the way to an Edge Server (ES) device of the station (drop) after the GE channel arrives at the downstream station, and the GE needs to be continuously sent to another downstream station (continue). The ES is a TV reception processing device in the IPTV network, which can be divided into a central server ES and an edge server ES. The ES is used for locally storing the broadcast data and plays the broadcast data to users close at hand. Generally, the service is bore through the GE channel; when the GE channel is broken off, the service is switched to a protection channel on the reverse-direction to continuously transmit the service to the destination.

In the prior art, the multicast service is implemented through the following methods to transmit Ethernet service signals.

The prior art 1: implementing the multicast of the GE channels based on 1:N optical splitters.

As to the GE channels to be broadcast, a source terminal of the Center adopts the 1:N optical splitter to divide one line of signals into N lines that are completely the same, and then sends the signals to different stations or clients by way of fiber direct connection, and signals are amplified at receiving ends by optical amplifiers.
The disadvantages of the technique are: the method of adopting the 1:N optical splitter needs a large number of optical amplifiers; meanwhile, each station is directly connected to the Center through the fiber, large amounts of fibers are needed for the GE channel transmission. For instance, if there are 32 GE channels to be broadcast, then 32 such splitters are needed and many optical amplifiers are needed at the same time for power amplification, it is impossible to utilize the WDM techniques to increase the bandwidth utilization of the fibers. In order to provide protections, more fibers are needed to provide backup routes, which will lead to large scale of the structure.

The prior art 2: implementing the multicast of the GE channels based on 1:2 optical splitters.

One line of the optical signals is divided into two lines by the 1:2 optical splitters, wherein one copy is sent to a local station while the other copy is sent to a next station, the signals can be amplified by the optical amplifiers when the power is inadequate.
The disadvantage of the technique is: in the method, each GE channel needs a splitter at each station, which leads to a physically separated system and it is difficult to manage and implement.

The prior technique 3: implementing the multicast by Virtual Channels (VCs) based on Synchronous Digital Hierarchy (SDH).

When the VC channels are adopted for a cross broadcast, each station has an SDH cross unit, through which the SDH device can broadcast the service based on the VC12 channel and VC4 channel, etc.
The disadvantage of the technique is: all the Ethernet service signals are encapsulated and mapped to SDH containers and the granularity is based on the VC, since one GE needs to occupy several VC channels for transmission, however, the VC channel resources in the SDH network are very limited, so it is impossible to broadcast large number of GE channels; moreover, the number of the stations is limited by the number which is decided by SDH protocols and protection switches; furthermore, in order to implement the WDM techniques, it needs the WDM network and the overlapped SDH network, which will lead to a complex network structure.

The prior technique 4: the multicast based on data devices.

In the method, an IP multicast adopts a best-effort transmission way to transmit IP packets of the service data to a certain subset of nodes in the network; a source host transmits a copy of information and the destination address of the information is a multicast address; all receivers in the multicast group can receive the same data, and only the hosts in the multicast group rather than others can receive the data; the multicast group is identified by a D-class IP address and is implemented by multicast protocols, e.g. an Internet Group Management Protocol (IGMP) snooping, etc.
The disadvantage of the technique is: since the IP packets need to be bore by the GE, it needs to analyze the address of each IP packet in order to implement the multicast, the process is complicated, and it is difficult to implement large granularity GE services, meanwhile, it has long delay and high cost, it is difficult to satisfy the requirements of high-quality real-time services and video services; furthermore, in order to implement the WDM technique, it needs the WDM network and the overlapped SDH network, which will lead to a complex network structure.
European patent application EP 1 220 542 A1provides a system and method for delivering broadcast-quality video with targeted advertising to viewers over the switched communication network, thereby providing a viable alternative to traditional cable, over-the-air, and direct broadcast satellite delivery systems.

### Summary of the Invention

The present invention is to provide a method and processing devices for transmitting Ethernet service signals in a Wavelength Division Multiplexing (WDM) network, which can implement multicast of large granularity Ethernet service signals in the WDM network conveniently and reduce the delay when multicasting the real-time service.

The present invention provides a method for transmitting the Ethernet service signals in the WDM network, including:
a Center Server (CS) receiving the Ethernet service signals and transmitting the signals to a transmission channel of the WDM network;
a receiving station receiving the Ethernet service signals from the transmission channel, performing a space-division cross-connect upon the received signals and duplicating the signals into two copies, wherein one copy is locally dropped and the other copy is returned to the transmission channel for continuous transmission to downstream stations.

Preferably, the CS transmits the Ethernet service signals in any direction of the transmission channel or in both directions of the transmission channel simultaneously; and
the receiving station receives the Ethernet service signals from any direction of the transmission channel or from both directions of the transmission channel simultaneously.

Preferably, the station implementing a protection switch by switching the directions of receiving and transmitting the Ethernet service signals.

Preferably, the step of duplicating is implemented by a space-division cross-connect module.

The duplication also can be implemented by a Media Access Control (MAC) layer according to a MAC layer label and a pre-configured forwarding table, or the step of duplicating is implemented by a network identifier module according to a self-defined identifier added to the Ethernet service signals and the pre-configured forwarding table.

Preferably, when the CS receives multiple Ethernet service signals at the same time,
the CS determining that the Ethernet service signals carry different MAC layer labels respectively; informing the receiving station of the MAC layer labels carried in each Ethernet service signal; and transmitting the multiple Ethernet service signals to the transmission channel; and
the receiving stations receiving the multiple Ethernet service signals, selecting the signals belonging to the present station from the locally dropped multiple Ethernet service signals to receive and discarding signals not belonging to the present station according to the MAC layer labels.

The MAC layer label is a Virtual Local Area Network (VLAN) label, or a Multiple-Protocol Label Switching (MPLS) label or a Resilient Packet Ring (RPR) label.

Preferably, when the CS receives multiple Ethernet service signals to be transmitted to a plurality of receiving stations at the same time,
the CS adding an identifier of the station that receives the service signals into each Ethernet service signal; correspondingly informing each receiving station of the identifier; and transmitting the multiple Ethernet service signals to the transmission channel for transmission;
the receiving station receiving the multiple Ethernet service signals, selecting the signals belonging to the present station from the locally dropped multiple Ethernet service signals to receive and discarding the signals not belonging to the present station according to the identifier information; and peeling the identifier information from the signals of the present station.

A device for transmitting Ethernet service signals in a Wavelength Division Multiplexing (WDM) network includes:
transmitting/receiving modules, which connect to transmission channels in the WDM network;
a local service processing part, which connects to a user side; and
a space-division cross-connect module, connected with the transmitting/receiving module and the local service processing part, and is used for performing a space-division cross-connect operation upon the Ethernet service signals and duplicating the Ethernet service signals;
wherein, the Ethernet service signals at network side received by transmitting/receiving modules are duplicated by the space-division cross-connect module into two copies, wherein one copy is transmitted to the local service processing part and the other copy is returned to the network side for continuous transmission to downstream stations.

Preferably, the local service processing part includes a Media Access Control (MAC) layer and a physical layer, wherein, the MAC layer connects to the space-division cross-connect module and the physical layer, selects the services that belong to the present station and to receive according to MAC layer labels, and discards other services.

Preferably, the device further includes:
a network identifier module, connected with the space-division cross-connect module and the local service processing part, and is used for adding identifiers to the Ethernet service signals, selecting services that belong to the present station to receive according to the added identifiers, and peeling identifier information of the Ethernet service signals that belong to the present station.

Preferably, the device further includes:
an Ethernet service signal encapsulation module and a mapping/framing module, which connect to the space-division cross-connect module and the transmitting/receiving modules.

A device for processing Ethernet service signals in a Wavelength Division Multiplexing (WDM) network includes:
transmitting/receiving modules, which connects to transmission channels of the WDM network;
a Media Access Control (MAC) layer that connects a user side; and
a space-division cross-connect module, connected with the transmitting/receiving modules and the MAC layer, and is used for performing a space-division cross-connect operation upon the Ethernet service signals;
wherein, the MAC layer is used for duplicating the Ethernet service signals from the space-division cross-connect module into two copies, wherein one copy is transmitted to a local station while the other copy is returned to the transmission channel of the WDM network through the space-division cross-connect module and transmitting/receiving modules for continuous transmission to downstream stations.

Preferably, the MAC layer is further used for selecting service signals that belong to the present station to receive according to MAC layer labels in the Ethernet service signals, and discarding other service signals from the space-division cross-connect module which do not belong to the present station.

Preferably, the device further includes:
an Ethernet service signals encapsulation module, a mapping/framing module, which connect the space-division cross-connect module and the transmitting/receiving module.

A device for processing Ethernet service signals in a Wavelength Division Multiplexing (WDM) network includes:
transmitting/receiving modules, which connects to transmission channels in the WDM network;
a local service processing part that connects the a user side; and
a space-division cross-connect module, connected with the transmitting/receiving module and a network identifier module, and is used for performing a space-division cross-connect operation upon the Ethernet service signals;
the network identifier module, which is used for duplicating the Ethernet service signals into two copies, removing the identifier of one copy and sending the signals to the local service processing part, and returning the other copy to the transmission channel of the WDM network through the space-division cross-connect module and transmitting/receiving modules for continuous transmission to downstream stations.

Preferably, the network identifier module is further used for selecting services that belong to the present station according to self-defined identifiers of the service signals, peeling the identifiers and transmitting the signals to the local service processing part.

Preferably, the local service processing part includes a MAC layer and a physical layer, wherein,
the MAC layer receives the Ethernet service signals from the network identifier module, selects the services that belong to the present station to receive according to MAC layer labels in the Ethernet service signals and discarding other services.

The device further includes:
an Ethernet service signal encapsulation module, and a mapping/framing module, which connects the space-division cross-connect module and the transmitting/receiving modules.

With the method and devices of the present invention, the following favorable technical effects can be achieved:
1. multicast of different capacity levels, such as large, medium or small granularity can be satisfied, and the multicast requirement of the video service in the Internet Protocol TV (IPTV) can be satisfied;
2. through the transmission channel provided by the WDM network, large number of GE channels can be conveniently multicast to receiving stations, so that video services that require high quality can be transmitted in real-time by making use of the large-capacity character of WDM, therefore lower the transmission cost;
3. when a plurality of Gigabit Ethernets (GEs) share one channel to transmit, services with lower priorities can be transmitted first so as to improve the bandwidth utilization;
4. it is not necessary anymore to construct the overlapped network with the WDM systems, the SDH systems and the data devices, so that network hierarchy is simple with convenient management and maintenance.

### Brief Description of the Drawings

Figure 1 is a schematic diagram illustrating the transmission of a drop and continue service requested by the IPTV;
Figure 2 is a schematic diagram illustrating the structure of a device for processing Ethernet service signals in the present invention;
Figure 3 is a schematic diagram illustrating the structure of a device according to a first embodiment of the present invention;
Figure 4 is a schematic diagram illustrating the structure of another device according to the third embodiment of the present invention;
Figure 5 is a schematic diagram illustrating still another device of the present invention;
Figure 6 is a schematic diagram illustrating the yet another device of the present invention;
Figure 7 is a flowchart illustrating a method according to an embodiment of the present invention;
Figure 8 is a flowchart illustrating the procedure of the CS transmitting services according to a first embodiment of the present invention;
Figure 9 is a flowchart illustrating the procedure of an ES receiving services according to the first embodiment of the present invention;
Figure 10 is a flowchart illustrating the procedure of multicasting different services through the GE channels according to the first embodiment of the present invention;
Figure 11 is a flowchart illustrating the edge station's receiving services according to the second embodiment of the present invention;
Figure 12 is a flowchart illustrating the procedure of multicasting multiple services with different VLAN labels through a shared channel according to the second embodiment of the present invention;
Figure 13 is a flowchart illustrating the procedure of multicasting multiple services with different station identifiers through a shared channel according to the third embodiment of the present invention.

### Detailed Description of the Invention

In order to make the technical scheme and advantages of the present invention clearer, the present invention will be illustrated in detail hereinafter with reference to the accompanying drawings.

To implement the method for multicasting the IPTV service in the WDM network, a new service signal processing device is needed. To make the illustration simple, take GE as an example, and other Ethernet service signals, such as FE, 10GE, etc., can be implemented following the same or similar method.

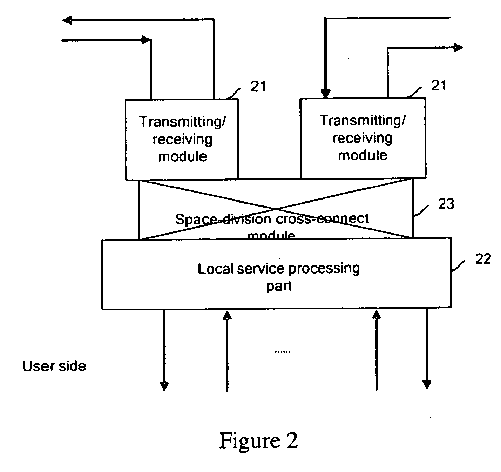

As shown in Figure 2, the device for processing the Ethernet service signals mainly includes transmitting/receiving modules 21 which connect to the transmission channels of the WDM network, a local service processing part 22 and a space-division cross-connect module 23 which connects to the transmitting/receiving modules 21 and the local service processing part 22.

Wherein, the above-mentioned Ethernet signals processing device receives the Ethernet service signals from the transmission channel of the WDM network through the transmitting/receiving modules 21, and then performs a space-division operation upon the Ethernet service signals and duplicates the signals into two copies through the space-division cross-connect module 23, one copy is sent to the local service processing part 22 and the other copy is returned to the transmission channel of the WDM network for continuous transmission.

The above-mentioned local service processing part 22 can includes a MAC layer and a physical layer. The MAC layer is used for a layer 2 switch based on a VLAN and bandwidth control, and further used for selecting services that belong to the present station to receive according to labels in packet headers. The above-mentioned local service processing part 22 can also include a network identifier module that is used for selecting services that belong to the present station to receive according to the identifiers added to the packet headers; accordingly in the MAC layer, therefore, the process of selecting services that belong to the present station according to labels in the packet headers is not performed in the MAC layer, the received packets can be directly processed. In addition, between the space-division cross-connect module and the transmitting/receiving port, the Ethernet service signal processing device can include an encapsulation module and a mapping/framing module. The Ethernet service signal processing device as in the present invention will be illustrated in detail hereinafter with reference to specific embodiments.

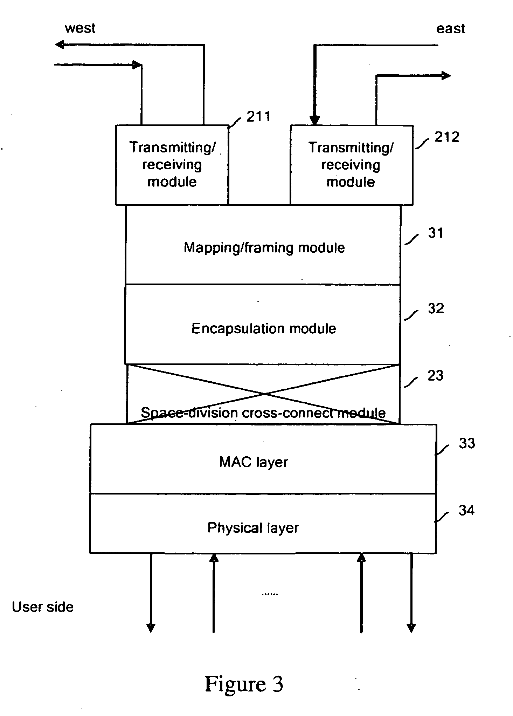

A first embodiment of the Ethernet service signal processing device as in the present invention is shown in Figure 3, the device includes a west transmitting/receiving module 211, an east transmitting/receiving module 212, the mapping/framing module 31, the encapsulation module 32, the space-division cross-connect module 23, the MAC layer 33 and the physical layer 34.

Wherein, the west transmitting/receiving module 211 and the east transmitting/receiving module 212 are physical interfaces of the WDM lines, and are used for implementing electric/optical and optical/electric conversions; there are two parallel pairs of the west and east transmitting/receiving modules to satisfy the need of bi-directional receiving and transmitting, and the two pairs of the modules are used for receiving the Ethernet service signals from the transmission channel of the WDM network and transmitting the received signals to the mapping/framing module 31 respectively, or receiving the signals from the mapping/framing module 31 and transmitting the signals to the transmission channel of the WDM network.

The mapping/framing module 31 is used for de-mapping the high speed service signals from the west transmitting/receiving module 211 or the east transmitting/receiving module 212 into low speed service signals, and transmitting the low speed signals to the encapsulation module 32; or mapping and framing the low speed service signals from the encapsulation module 32 into high speed services, e.g. mapping a 1.25G GE service to a 2.5G service or a 10G service or a service with a higher speed.

The encapsulation module 32 is used for decapsulating the low speed service signals from the mapping/framing module 31 and transmitting the decapsulated signals to the space-division cross-connect module 23; or encapsulating the service signals from the space-division cross-connect module 23 and transmitting the encapsulated signals to the mapping/framing module 31. The encapsulation can be implemented by a General Framing Procedure (GFP) or other ways.

The rate of the channel transmitted on the WDM line is probably higher than that of the channel of the local service signals, therefore, after the processing of the above-mentioned encapsulation module 32 and the mapping/framing module 31, the high speed signals on the WDM line can be transformed into low speed signals that the local device can process; and the low speed signals that the local device can process can also be transformed into high speed signals on the WDM line.

The space-division cross-connect module 23 is used for crossing the service signals from the encapsulation module 32 and duplicating the signals into two copies, one copy is sent to the encapsulation module 32 and the other copy is sent to the MAC layer 33. Wherein, the space-division cross-connect module 23 can adopt the format of a switching matrix, to duplicate the data by inputting the data from one port and outputting two copies through two ports. By duplicating the signals and transmitting the duplicated signals to the local MAC layer 33 and to the WDM network through the encapsulation module 32 respectively, the space-division cross-connect module 23 can drop and continue to transmit the multicast services. As to the GE service, the space-division cross-connect module 23 can be called a GE Add/Drop Multiplexer (ADM) module.

The function of the MAC layer 33 in the present embodiment is the same as that in the prior art, e.g. used for service bandwidth control, VLAN-based layer2 switching, etc.

The function of the physical layer 34 in the present embodiment is also the same as that in the prior art, it processes the layer 2 data from the MAC layer 33. The physical layer 34 includes a physical interface between the Ethernet service signal processing device and the client, and is used for implementing the optical/electric or the electric/optical switch, timing and relevant detection functions at the client side.

As to the Ethernet service signals processing device according to the second embodiment of the present invention, the structure of the device is the same as that in the first embodiment, the difference is that, in the second embodiment, except for the functions in the first embodiment, the MAC layer 33 is further used for receiving the service packets that belong to the present station according to the configured forwarding table which includes packet labels, i.e. the corresponding relationships between MAC labels and output ports, and the MAC layer 33 discarding other service packets from the space-division cross-connect module 23.

The above-mentioned packet labels can be Multi-Protocol Label Switch (MPLS) labels, Resilient Packet Ring (RPR) labels or VLAN labels. Since the MPLS label needs signaling protocol to create label switch channels, and the RPR label needs topology discovery, fair algorithms, etc., the processing is relatively complicated. However, the VLAN label needs no protocol. It just needs to configure the forwarding table at each node, so that it implements the forwarding or duplication by searching the corresponding exports to the packets according to the forwarding table. Therefore, the VLAN label is a preferable choice. If the MPLS label or the RPR label is adopted to implement the above-mentioned two embodiments, after the protocol and algorithms, the final forwarding or duplication methods are basically the same as those when adopting the VLAN label. Both of them search the forwarding table for the corresponding export according to the label and transmit the packets through the export.

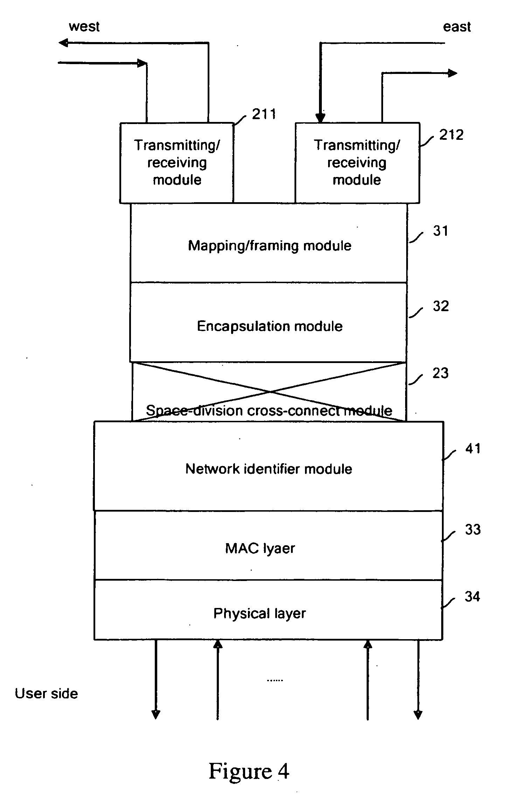

The structure of the Ethernet service signal processing device in the fourth embodiment of the present invention is shown in Figure 4. It can be seen from Figure 4 that, except for the modules in Figure 3, the device of the present embodiment further includes the network identifier module 41, which connects the space-division cross-connect module 23 and the MAC layer 33, and is used for adding or peeling the identifier from packet header, receiving services of the present station and discarding other services according to the identifier. Specifically: the network identifier module 41 adds an identifier, which corresponds to the receiving station and/or the port number of the receiving station, to the service packets from the MAC layer 33 at the source station; and receives the duplicated packets from the space-division cross-connect module 23, receives the services that belong to the present station and/or the port of the present station according to the identifier added to the received packet header, and peels the identifier of service packet that belongs to the present station and/or the port of the present station before transmitting the packets to the MAC layer 33. The functions of other modules are the same as those in the first embodiment.

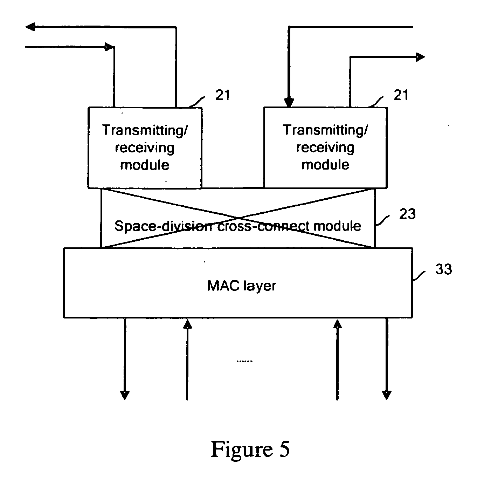

As shown in Figure 5, another type of device for processing Ethernet service signals is also provided, which includes: the transmitting/receiving modules 21 that connect the transmission channels of the WDM network, the MAC layer 33, and the space-division cross-connect module 23 which connects the transmitting/receiving modules 21 and the MAC layer 33.

Wherein, the above mentioned Ethernet service signal processing device receives the Ethernet service signals from the transmission channel of the WDM network through the transmitting/receiving modules 21, performs the space-division cross-connect upon the Ethernet service signals through the space-division cross-connect module 23 and then transmits the signals to the MAC layer 33; the MAC layer 33 duplicates the Ethernet service signals from the space-division cross-connect module 23 into two copies, wherein one copy is transmitted to the local station while the other copy is returned to the transmission channel of the WDM network through the space-division cross-connect module 23 and the transmitting/receiving modules 21 for continuous transmission.

The structure of the above-mentioned Ethernet service signal processing device is basically the same as that shown in Figure 3, the difference is that, in the present embodiment, the space-division cross-connect module 23 only performs the space-division cross-connect upon the received data and provides a flexible GE channel penetration function without duplicating the data. The MAC layer 33 is further used for forwarding the packets received from the space-division cross-connect module 23 to the physical layer 34 through the local port corresponding to the label, and meanwhile returning the received packets to the space-division cross-connect module 23 through the other port corresponding to the label, according to the forwarding table which configures the local export and the port to return to the space-division cross-connect module 23 corresponding to each packet.

In the present embodiment, except for the above-mentioned function, the MAC layer 33 can be further used for receiving services that belong to the present station according to the forwarding table which includes the corresponding relationship between the packet label and exports, and discarding other service packets from the space-division cross-connect module 23.

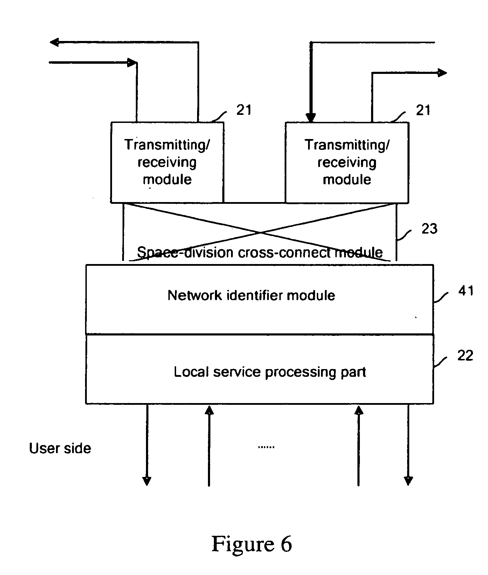

As shown in Figure 6, a third type of Ethernet service signal processing device is also provided, which includes: the transmitting/receiving modules 21 that connect the transmission channels of the WDM network, the space-division cross-connect module 23, the network identifier module 41 and the local service processing part 22.

Wherein, the above-mentioned Ethernet signal processing device receives the Ethernet service signals from the transmission channel of the WDM network through the transmitting/receiving modules 21, performs the space-division operation upon the Ethernet service signals through the space-division cross-connect module 23 and then transmits the signals to the network identifier module 41. The network identifier module 41 duplicates the Ethernet service signals from the space-division cross-connect module 23 into two copies according to the identifier added to packet header of the service signals and the forwarding table, one copy is sent to the local service processing part 22 and the other copy is returned to the transmission channel of the WDM network for continuous transmission.

The structure of the device in the present embodiment is the same as that in Figure 4, wherein, the differences of the functions of the modules in Figure 4 from those in Figure 3 are: the space-division cross-connect module 23 only performs the space-division upon the received data and provides the flexible GE channel penetration function without duplicating the data. Except for adding, peeling the identifier, the network identifier module 41 is further used for forwarding the packets received from the space-division cross-connect module 23 to the MAC layer 33 through the local port corresponding to the label, and meanwhile returning the received packets to the space-division cross-connect module 23 through the other port corresponding to the label, according to the forwarding table which configures the local export and the port to return to the space-division cross-connect module 23 corresponding to each packet.

In the present device, the MAC layer 33 can be further used for receiving services that belong to the present station according to the forwarding table that include the corresponding relationship between the packet label and exports, and discarding other service packets from the space-division cross-connect module 23. In addition, the alternative process is: the network identifier module 41 duplicates and forwards the Ethernet service signals according to the forwarding table, and meanwhile directly returns the service signals to the space-division module without selection; as to the Ethernet service signals forwarded to the MAC layer, the network identifier module 41 selects the services that belong to the present station while discards other services.

In the above-mentioned two devices, although both of the space-division cross-connect module and the MAC layer can implement data duplication, the data duplication implemented by the space-division cross-connect module is of shorter delay and better transparent quality, so the space-division cross-connect module is a preferable choice.

The above provided devices used in the WDM network combine the advantages of the space-division technologies and the WDM technologies and implement the drop and continue transmission required by the IPTV multicast service, so that the IPTV multicast service has shorter delay and better transparent quality, the large-capacity bandwidth is implemented and network structure is simple. With the devices of the present invention, it is not necessary anymore to construct the overlapped networks with the WDM systems, the SDH systems and the data devices, and the network can be constructed only by the WDM network, so that the network hierarchy is simple, the management and the maintenance is convenient.

The device of the present invention has been illustrated as above, the method of the present invention for transmitting the Ethernet service signals in the WDM network will be illustrated in detail hereinafter.

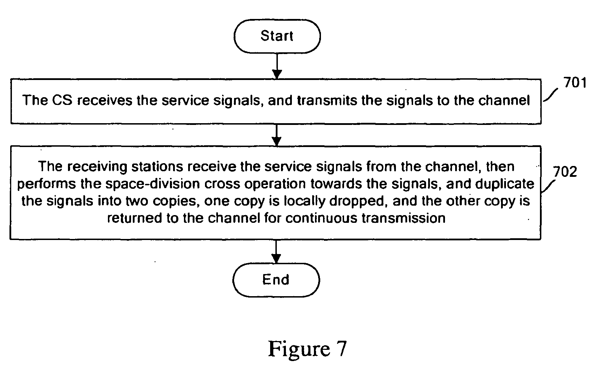

As shown in Figure 7, the method of the present invention mainly includes the following steps:
Step 701: a CS receiving the Ethernet service signals and transmitting the signals to a transmission channel;
Step 702: the receiving station receiving the Ethernet service signals from the transmission channel, performing a space-division cross-connect upon the received signals and duplicating the signals into two copies, wherein one copy is downloaded locally and the other copy is returned to the transmission channel for continuous transmission.

In the above-mentioned step 702: the duplication of the received signals can be implemented by the space-division cross-connect module or implemented by the MAC layer after the received signals is processed by the space-division cross-connect module. In addition, as to the locally downloaded service signals, the receiving station can identify and receive the services that belong to itself according to the MAC layer label in the signals or the identifier added to the signals while discard the services not belonging to itself.

The method for transmitting the Ethernet service signals in the WDM network will be illustrated hereinafter with reference to several specific embodiments. Supposing that there are 6 stations in the WDM network, for the sake of simplicity, the GE service is taken as an example. A is the CS of the network and it is also the source station of the multicast; the other 5 are receiving stations or edge stations; and each station is equipped with the device for multicast in the preset invention. Each embodiment will be illustrated according to the service procedure of the CS and that of the edge station respectively.

The first embodiment: implementing the GE channel multicast in the WDM network.

Implementing the multicast of large granularity GE service by an ADM technique based on the GE. With the technique, the GE service from the CS is multicast to the downstream edge stations through the GE channels provided by the WDM system; meanwhile, the GE-based ADM cross module, i.e. the above-mentioned space-division cross-connect module which is shortened as the GE ADM cross module, implements to drop, duplicate and continuously transmit the GE service to the downstream stations.

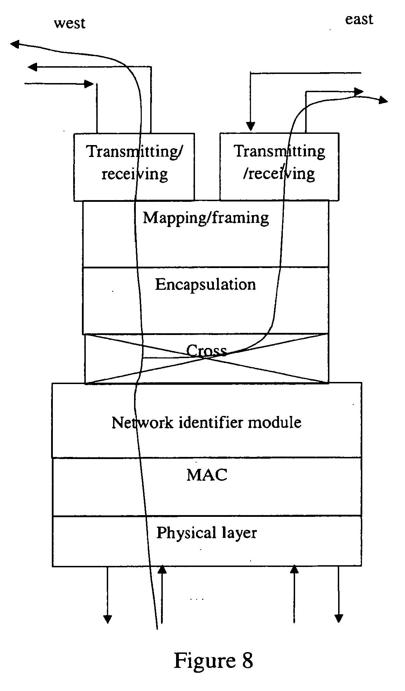

At the service transmission side, as shown in Figure 8, at the source station, the service from the client enters into the WDM system through the physical layer interface, the GE service in embodiment 1 only requires the GE channel multicast, so it is not necessary for the MAC to especially process the service; in the GE ADM cross module, the received GE service signals are processed by the GE ADM cross function and then encapsulated, mapped and framed, and after that, the GE service signals can be output through the west optical interface or through the east optical interface. If the network is in normal condition, the multicast service receiving stations only need to receive one of the west and the east signals, and the source station can send only one line of the service, either to the west or to the east, when the network breaks down and protection switch is needed, the GE ADM cross module will perform the switch process; assuming that the service is received from the west in normal conditions, when malfunction is detected in the west, e.g. the west receiving module or the service encapsulation module breaks down, the GE ADM cross module will perform the switch process; or the GE ADM cross module distributes the signals from the client into two copies and sends the two copies to both the west and the east. Therefore, the east output receiving module and the west output receiving module can be configured in one direction or two directions.

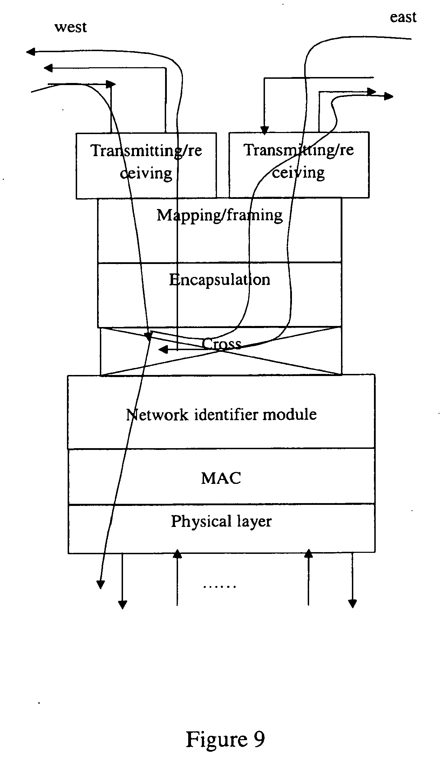

At the service reception side, the flowchart in Figure 9 illustrates the function module of the multicast service receiving station. The module connects the two directions of the ring network, i.e. the west and the east. In normal conditions, the west service and the east service are input through respective receiving modules, and are reverted to the GE signals after de-multiplexing and de-capsulation, then the reverted GE signals are input into the GE ADM cross module. The GE ADM cross module selects a service to receive. Assuming that the west service is received, the west GE service is duplicated in the GE ADM cross module into two copies, one of which is sent to the client while the other copy is returned by the GE ADM cross module and output by the east sending module after encapsulation, mapping and framing. The process of the east service is reverse. Therefore, the GE signals from the ring network is dropped in the present station and continued to be transmitted to the next station through the WDM line after duplication, thus the drop and continuous transmission is realized.

In this method, the GE ADM cross module can select to receive the east or the west service, so the module has the protection switch function. Taking the station D for example, in normal conditions, the station D receives the service signals from its right side (the east), then the GE ADM cross module will send the service signals from the east to the client and output the service signals to the station E through the west fiber after duplicating the service signals. If the fiber between the station B and the station D breaks down, the station D cannot receive the service signals from the station C. Instead, it will receive the service from the station E on its left (the west). Then the GE ADM cross module in the station D will send the service signals from the west to the client, meanwhile duplicate the GE and output it to the station C through the right side (east) fiber. Thus, the GE ADM cross module implements service selection, protection switch and the GE channel duplication.

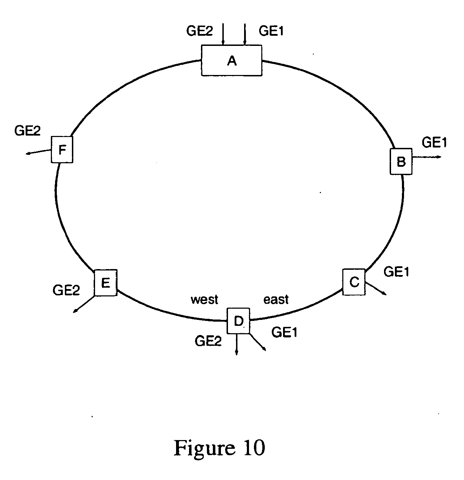

Figure 10 is a network topology of the first embodiment and a flowchart illustrating the procedure of multicasting different services through the GE channels to different receiving stations in the first embodiment of the present invention. GE1 is multicast to station B, C and D, while GE2 is multicast to station D, E and F.

In this way, as to the IPTV or the digital TV, the service devices can distribute video services to different GE channels and the number of GE channels increases with the video services. The source station needs to multicast programs to the downstream stations, wherein, with the WDM system as in the present invention on the transmission link, it is possible to multicast large amounts of GE channels to the receiving stations conveniently. Therefore the video services that require high quality can be transmitted in real-time by making use of the large-capacity of the WDM, and the transmission cost is reduced accordingly.

The second embodiment: implementing the multicast in the WDM network based on the MAC layer label carried in the service.

The MAC layer labels includes VLAN labels, MPLS labels, or RPR labels, etc. wherein, the VLAN label is the most convenient, so the embodiment will be illustrated with the VLAN label as an example.

When the upstream service of the CS is the GE service that includes different VLAN labels, in order to improve the bandwidth utilization, the WDM will multicast the GE service to different downstream stations in a shared channel according to the VLAN labels and the difference of the VLAN labels.

The function of the CS in the present embodiment is the same as that in the first embodiment, and the specific process is shown as Figure 9. The GE service from the source station includes different VLAN labels, the east/west service selection and the service duplication are the same as those in the first embodiment. The difference lies in that the MAC layer of the source station in the second embodiment needs to identify the VLAN labels carried in the Ethernet service signals which are received by each receiving station, and the MAC layer correspondingly notify each receiving station through a control channel; each receiving station configures the forwarding table which includes the corresponding relationship between the VLAN label and the port according to the received notification, and sets the port corresponding to the VLAN label of the service packets that belong to the present station as the local port. The MAC layer of the receiving station selects, through the VLAN label, the service signals that belong to the present station to locally download according to the configured forwarding table, and discards the services not belonging to the present station, however, in the first embodiment, the selection procedure according to the VLAN label is not necessary.

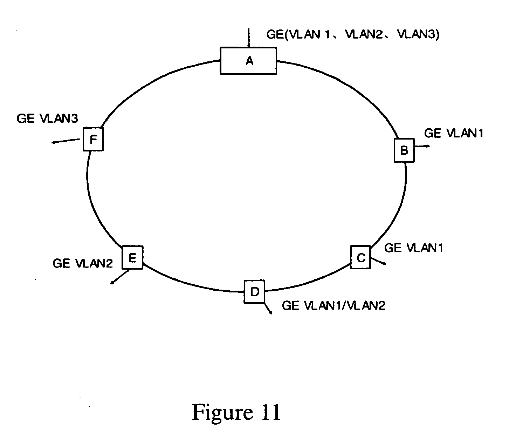

As shown in Figure 11, the source station receives three services from the client side that carry different VLAN labels and multicasts the services to the downstream stations. Each downstream station identifies the services of the present station through the VLAN labels, and then continues to transmit the service to the next station on the WDM line after dropping and duplicating the service. Due to the different VLAN labels in the service, several services with low-priority can share one GE channel to transmit so as to improve the bandwidth utilization; the bandwidth is equally compressed by the VLAN multicast.

In the present embodiment, the services with different priorities can share different GE channels respectively, e.g., the services with high priority share the GE channel 1 while services with low priority share the GE channel 2 and then different protection strategies are performed upon the GE channel 1 and GE channel 2.

In the present embodiment, the duplication of Ethernet service signals can also be implemented by the MAC layer, thus two ports need to be configured for each MAC layer label in the forwarding table of the MAC layer, one port of which is a local export while the other port is for returning service signals to the WDM network channel through the space-division cross-connect module. As to the service signals not belonging to the present station, the local export can be configured as null. The space-division cross-connect module only performs the space-division cross-connect upon the service signals, the MAC layer outputs the services through the corresponding port according to the forwarding table after duplicating the service signals.

The third embodiment: implementing the service multicast in the shared channel based on self-defining identifiers of the WDM network.

In order to improve the bandwidth utilization, a set of identifier information of stations and ports can be defined in the WDM network to differentiate the Ethernet service signals that are sent to different stations in the shared Ethernet channels.

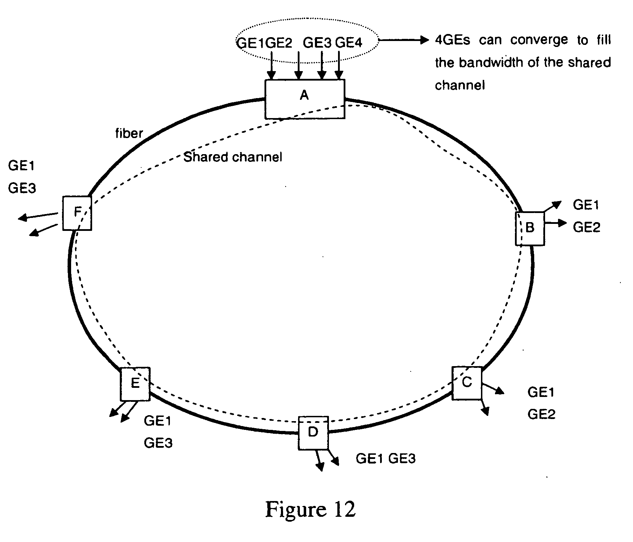

As shown in Figure 12, the CS has 4 GEs that are transmitted in the WDM system through one or several shared GE channels. These 4 GEs will be multicast to different stations. Wherein, the source station needs to control the bandwidth of the service in the MAC layer based on the VLAN, etc., so as to limit the bandwidth of the WDM line within a predefined capacity, since several GEs share one or more GE channels, e.g. share one GE channel, in order to differentiate the upstream services from different ports in the shared channel, and in order to make the receiving station differentiate the downstream services that arrive at different receiving ports in the shared channel, in a WDM network identifier layer as in the embodiment, the services from the 4 GEs need to be identified and differentiated, e.g. identifying the services by 1, 2, 3 and 4, the services are output through the space-division cross-connect module to the west and the east after informing the corresponding station of the identification information, and send the services to the west/east WDM line after encapsulating, mapping and framing.

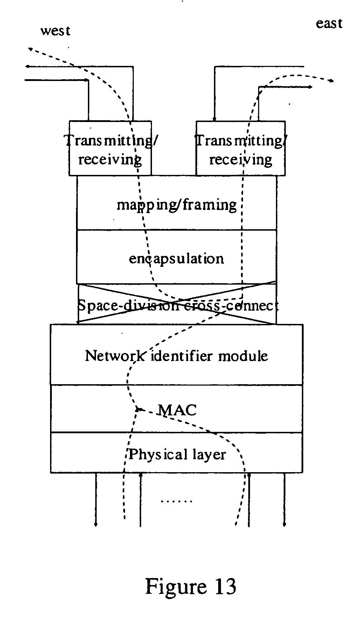

As shown in Figure 13, in the multicast service receiving stations, the function of the CS is the same as that in the first embodiment, just the implementing procedure of the multicast service receiving station is different from that in the first embodiment. The GE services from different ports at the source station share one GE channel to transmit and are identified in the WDM network to differentiate the GE services from different ports, the procedure of selecting the east/west service and that of the service duplication are the same as those in the first embodiment, however, the reception is performed according to the WDM identifiers, so when the services to be sent to the client side passing the WDM identifier identifying/removing layer, i.e. the network identifier module described above in the device, just selects the services belonging to the present station, removing the identifier and then sending the services to the corresponding client port, while the services not belonging to the present station will be discarded according to the identifiers and the corresponding relationship between the ports and the identifiers that are preset according to the notification from the source station, i.e. the forwarding table. This is the difference from the first embodiment, in which the WDM identifying layer does not need to execute the WDM identifier selection.

In the present embodiment, the duplication of the Ethernet service signals can also be performed by the WDM identifier identifying/removing layer, then it is needed to configure two exports for each self-defining identifier of the WDM network in the forwarding table in the WDM identifier identifying/removing layer, one port is the local export while the other port is for returning the service signals to the WDM network channel through the space-division cross-connect module. As to the service signals not belonging to the present station, the local export can be configured as null. The Space-division cross-connect module only performs the space-division cross-connect upon the service signals, and the WDM identifier identifying/removing layer outputs the service data through the corresponding port according to the forwarding table after duplicating the service signals.

As to the above-illustrated three different types of multicast methods, the first multicast method takes the GE granularity as an unit, while the second method and the third method adopts the shared channel, wherein, the second method differentiates the services of different stations in the shared channels according to the VLAN labels of the GE service itself, but the third method makes use of the self-defined identifier information to differentiate services of different stations.

In specific implementations, the methods of the present invention can be modified accordingly to adapt to specific situations. Thus it can be easily understood that the embodiments according to the present invention are just demonstrations but not used to confine the protection scope of the present invention.

## Claims

1. A method for transmitting Ethernet service signals in a Wavelength Division Multiplexing, WDM, network, comprising:
a Center Server, CS, receiving the Ethernet service signals and transmitting the signals to a transmission channel of the WDM network for transmission(701);
and **characterized by**:
a receiving station receiving the Ethernet service signals from the transmission channel, performing a space-division cross-connect operation upon the received signals and duplicating the signals into two copies, wherein one copy is locally dropped and the other copy is returned to the transmission channel for continuous transmission to downstream stations (702).

2. The method according to claim 1, wherein,
the CS transmits the Ethernet service signals in any direction of the transmission channel or in both directions of the transmission channel simultaneously; and
the receiving station receives the Ethernet service signals from any direction of the transmission channel or from both directions of the transmission channel simultaneously.

3. The method according to claim 2, further comprising:
the station implementing a protection switch by switching the directions of receiving and transmitting the Ethernet service signals.

4. The method according to claim 1, wherein, the step of duplicating is implemented by a space-division cross-connect module.

5. The method according to claim 1, wherein, the duplication is implemented by a Media Access Control, MAC, layer according to a MAC layer label and a pre-configured forwarding table, or the step of duplicating is implemented by a network identifier module according to a self-defined identifier added to the Ethernet service signals and the pre-configured forwarding table.

6. The method according to any one of claim 1 to 5, further comprising:
when the CS receives multiple Ethernet service signals at the same time,
the CS determining that the Ethernet service signals carry different MAC layer labels respectively; informing the receiving station of the MAC layer labels carried in each Ethernet service signal; and transmitting the multiple Ethernet service signals to the transmission channel; and
the receiving stations receiving the multiple Ethernet service signals, selecting the signals belonging to the present station from the locally dropped multiple Ethernet service signals to receive and discarding signals not belonging to the present station according to the MAC layer labels.

7. The method according to claim 6, wherein: the MAC layer label is a Virtual Local Area Network, VLAN, label, or a Multiple-Protocol Label Switching, MPLS, label or a Resilient Packet Ring, RPR, label.

8. The method according to any one of claim 1 to 5, further comprising:
when the CS receives multiple Ethernet service signals to be transmitted to a plurality of receiving stations at the same time,
the CS adding an identifier of the station that receives the service signals into each Ethernet service signal; correspondingly informing each receiving station of the identifier; and transmitting the multiple Ethernet service signals to the transmission channel for transmission;
the receiving station receiving the multiple Ethernet service signals, selecting the signals belonging to the present station from the locally dropped multiple Ethernet service signals to receive and discarding the signals not belonging to the present station according to the identifier information; and peeling the identifier information from the signals of the present station.

9. A device for transmitting Ethernet service signals in a Wavelength Division Multiplexing, WDM, network, the device being for a station of the WDMn network and comprising:
transmitting/receiving modules (21) for connecting to transmission channels in the WDM network;
a local service processing part (22) for connecting to a user side; and
a space-division cross-connect module (23), connected with the transmitting/receiving modules (21) and the local service processing part (23), and for performing a space-division cross-connect operation upon the Ethernet service signals and duplicating the Ethernet service signals;
**characterised in that** the space-division cross-connect module (23) is such that
the Ethernet service signals received by the transmitting/receiving modules (21) from the WDM network are duplicated by the space-division cross-connect module (23) into two copies, wherein one copy is transmitted to the local service processing part (22) and the other copy is returned to the transmission channels in the WDM network for continuous transmission to downstream stations of the WDM network.

10. The device according to claim 9, wherein, the local service processing part (22) comprises a Media Access Control, MAC, layer (33) and a physical layer (34), wherein, the MAC layer (33) connects to the space-division cross-connect module (23) and the physical layer (34), and is for selecting the services that belong to the to the station, receiving according to MAC layer labels and discarding other services.

11. The device according to claim 9, further comprising:
a network identifier module (41), connected with the space-division cross-connect module (23) and the local service processing part (22), and for adding identifiers to the Ethernet service signals, selecting services that belong to the station to receive according to the added identifiers, and peeling identifier information of the Ethernet service signals that belong to the station.

12. The device according to any one of claim 9 to 11, further comprising:
an Ethernet service signal encapsulation module (32) and a mapping/framing module (31) which connect to the space-division cross-connect module (23) and the transmitting/receiving modules (211, 212).

13. A device for processing Ethernet service signals in a Wavelength Division Multiplexing, WDM, network, the device being for a station of the WDM network and comprising:
transmitting/receiving modules (211, 212), for connecting to transmission channels in the WDM network;
a Media Access Control, MAC, layer (33) for connecting a user side; and
a space-division cross-connect module (23), connected with the transmitting/receiving modules (211, 212) and the MAC layer (33), and for performing a space-division cross-connect operation upon the Ethernet service signals;
**characterised in that** the MAC layer (33) is for duplicating the Ethernet service signals from the space-division cross-connect module (23) into two copies such that one copy is transmitted to the station while the other copy is returned to the transmission channels in the WDM network through the space-division cross-connect module (23) and transmitting/receiving modules (211, 212) for continuous transmission to downstream stations of the WDM network.

14. The device according to claim 13, wherein, the MAC layer (33) is further for selecting service signals that belong to the station to receive according to MAC layer labels in the Ethernet service signals, and discarding other service signals from the space-division cross-connect module (23) which do not belong to the station.

15. The device according to claim 13 or 14, further comprising:
an Ethernet service signals encapsulation module (32) and a mapping/framing module (31) which connect to the space-division cross-connect module (23) and the transmitting/receiving module (211, 212).

16. A device for processing Ethernet service signals in a Wavelength Division Multiplexing, WDM, network, the device being for a station of the WDM network and comprising:
transmitting/receiving modules (211, 212) for connecting to transmission channels in the WDM network;
a local service processing part (22) for connecting the a user side; and
a space-division cross-connect module (23), connected with the transmitting/receiving modules (211, 212) and a network identifier module (41), and for performing a space-division cross-connect operation upon the Ethernet service signals;
**characterised in that**
the network identifier module (41) is for duplicating the Ethernet service signals into two copies, removing the identifier of one copy, sending the first copy to the local service processing part (22) and returning the other copy to the transmission channels in the WDM network through the space-division cross-connect module (23) and transmitting/receiving modules (211, 212) for continuous transmission todownstream stations.

17. The device according to claim 16, wherein, the network identifier module (41) is further for selecting services that belong to the station according to self-defined identifiers of the service signals, peeling the identifiers and transmitting the signals to the local service processing part (22).

18. The device according to claim 16, wherein the local service processing part (22) comprises a MAC layer (33) and a physical layer (34), wherein,
the MAC layer (33) is for receiving the Ethernet service signals from the network identifier module (41), selecting the services that belong to the station to receive according to MAC layer labels in the Ethernet service signals and discarding other services.

19. The device according to claim 16 or 18, further comprising:
an Ethernet service signal encapsulation module (32) and a mapping/framing module (31) which connect to the space-division cross-connect module (23) and the transmitting/receiving modules (211, 212).

## Patentansprüche

1. Verfahren zum Übertragen von Ethernet-Dienstsignalen in einem Wellenlängenmultiplex-(WDM-)Netzwerk, welches aufweist:
einen Zentralserver CS, welcher die Ethernet-Dienstsignale empfängt und die Signale zu einem Übertragungs- bzw. Sendekanal des WDM-Netzwerks zur Übertragung (701) sendet;
**gekennzeichnet durch**:
eine Empfangsstation, welche die Ethernet-Dienstsignale von dem Übertragungskanal empfängt, wobei eine Raum-Rangierleitungsoperation an den empfangenen Signalen durchgeführt wird und die Signale in zwei Kopien dupliziert werden, wobei eine Kopie lokal abgezweigt wird und die andere Kopie zu dem Übertragungskanal für eine kontinuierliche Übertragung zu Stationen in Abwärtsrichtung (702) zurückgeschickt wird.

2. Verfahren nach Anspruch 1, wobei
der CS die Ethemet-Dienstsignale in irgendeine Richtung des Übertragungskanals oder in beide Richtungen des Übertragungskanals gleichzeitig sendet; und
die Empfangsstation die Ethernet-Dienstsignale von irgendeiner Richtung des Übertragungskanals oder von beiden Richtungen des Übertragungskanals gleichzeitig empfängt.

3. Verfahren nach Anspruch 2, welches ferner aufweist:
die Station, welche einen Schutzschalter durch Schalten der Richtungen des Empfangens und Übertragens der Ethernet-Dienstsignale implementiert.

4. Verfahren nach Anspruch 1, wobei der Schritt des Duplizierens durch ein Raum-Rangierleitungsmodul implementiert ist.

5. Verfahren nach Anspruch 1, wobei das Duplizieren durch eine Medienzugriffs-Steuerungs-,MAC-, Schicht entsprechend einer MAC-Schicht-Kennung und einer vorkonfigurierten Weiterleitungstabelle implementiert ist, oder der Schritt des Duplizierens durch ein Netzwerk-Identifizierungsmodul entsprechend einem selbstdefinierten Identifiziergliedes implementiert ist, welches an die Ethernet-Dienstsignale und die vorkonfigurierte Weiterleitungstabelle angefügt ist.

6. Verfahren nach einem der Ansprüche 1 bis 5, welches ferner aufweist:
wenn der CS viele Ethernet-Dienstsignale zur gleichen Zeit empfängt,
das CS-Bestimmen, dass die Ethernet-Dienstsignale jeweils unterschiedliche MAC-Schicht-Kennungen bzw. -Etiketten tragen; das Informieren der Empfangsstation der MAC-Schicht-Etiketten, welche in jedem Ethernet-Dienstsignal getragen werden; und
das Senden der vielen Ethernet-Dienstsignale zu dem Übertragungskanal; und
das Empfangen der Empfangsstationen der vielen Ethernet-Dienstsignale, das Auswählen der Signale, welche zu der vorhandenen Station gehören, aus den lokal abgezweigten vielen Ethernet-Dienstsignalen, um zu empfangen, und das Außerachtlassen von Signalen, welche nicht zu der gegenwärtigen Station gehören, entsprechend den MAC-Schicht-Etiketten.

7. Verfahren nach Anspruch 6, wobei: das MAC-Schicht-Kennung eine virtuelle Lokalnetzwerks-VLAN-Kennung oder eine Vielfachprotokollkennungs-Vermittlungs-MPLS-Kennung oder eine nachgebende Paketring-RPR-Kennung ist.

8. Verfahren nach einem der Ansprüche 1 bis 5, welches ferner aufweist:
wenn der CS viele Ethernet-Dienstsignale empfängt, welche zu einer Vielzahl von Empfangsstationen zur gleichen Zeit zu senden sind,
das Hinzufügen des CS einer Kennung der Station, welche die Dienstsignale in jedem Ethernet-Dienstsignal empfängt; entsprechendes Informieren jeder Empfangsstation von dem Identifizierglied; und Senden der vielen Ethernet-Dienstsignale zu dem Übertragungskanal für die Übertragung;
das Empfangen der Empfangsstation der vielen Ethernet-Dienstsignale, das Auswählen der Signale, welche zu der gegenwärtigen Station gehören, aus den lokal abgezweigten vielen Ethernet-Dienstsignalen, um zu empfangen, und das Außerachtlassen der Signale, welche nicht zu der gegenwärtigen Station gehören, entsprechend der Kennungsinformation; und das Abstreifen der Kennungsinformation von den Signalen der gegenwärtigen Station.

9. Einrichtung zum Senden von Ethernet-Dienstsignalen in einem Wellenlängenmultiplex-(WDM-)Netzwerk, wobei die Einrichtung für eine Station des WDM-Netzwerkes ist und aufweist:
Sende-/Empfangsmodule (21) für das Anschließen an Übertragungskanäle in dem WDM-Netzwerk;
ein lokales Dienstverarbeitungsteil (22) zum Anschließen an eine Benutzerseite; und
ein Raum-Rangierleitungsmodul (23), welches mit den Sende-/Empfangsmodulen (21) und dem lokalen Dienstverarbeitungsteil (23) verbunden ist, und zum Durchführen einer Raum-Rangierleitungsoperation an den Ethernet-Dienstsignalen und zum Duplizieren der Ethemet-Dienstsignale;
**dadurch gekennzeichnet, dass** das Raum-Rangierleitungsmodul (23) derart ist, dass die Ethernet-Dienstsignale, welche durch die Sende-Empfangsmodule (21) von dem WDM-Netzwerk empfangen werden, durch das Raum-Rangierleitungsmodul (23) in zwei Kopien dupliziert werden, wobei eine Kopie zu dem lokalen Dienstverarbeitungsteil (22) gesendet wird und die andere Kopie zu den Übertragungskanälen in dem WDM-Netzwerk für die kontinuierliche Übertragung zu Stationen in Abwärtsrichtung des WDM-Netzwerks zurückgeschickt werden.

10. Einrichtung nach Anspruch 9, wobei das lokale Dienstverarbeitungsteil (22) eine Medienzugriffssteuerungs-MAC-Schicht (33) und eine physikalische Schicht (23) aufweist, wobei die MAC-Schicht (33) an das Raum-Rangierleitungs-modul (23) und die physikalische Schicht (34) angeschlossen ist und dazu dient, die Dienste auszuwählen, welche zu der Station gehören, welche entsprechend zu den MAC-Schicht-Kennungen empfängt, und andere Dienste außer Acht lässt.

11. Einrichtung nach Anspruch 9, welche ferner aufweist:
ein Netzwerk-Identifiziermodul (41), welches an das Raum-Rangierleitungsmodul (23) und das lokale Dienstverarbeitungsteil (22) angeschlossen ist, und um die Kennungen an die Ethernet-Dienstsignale hinzuzufügen, die Dienste auszuwählen, welche zu der Station gehören, um entsprechend der hinzugefügten Kennungen zu empfangen, und um die Kennungsinformation der Ethernet-Dienstsignale abzustreifen, welche zu der Station gehören.

12. Einrichtung nach einem der Ansprüche 9 bis 11, welche ferner aufweist:
ein Ethernet-Dienstsignal-Verkapselungsmodul (32) und ein Abbildungs/Rahmengebungsmodul (31), welches an das Raum-Rangierleitungsmodul (23) und das Sende-/Empfangsmodul (211, 212) angeschlossen ist.

13. Einrichtung zum Verarbeiten von Ethernet-Dienstsignalen in einem Wellenlängenmultiplex-(WDM-)Netzwerk, wobei die Einrichtung für eine Station des WDM-Netzwerks ist und aufweist:
Sende-/Empfangsmodule (211, 212) zum Anschließen an Übertragungskanäle in dem WDM-Netzwerk;
eine Medien-Zugriffs-Steuer-(MAC-)Schicht (33), um eine Nutzerseite anzuschliessen; und
ein Raum-Rangierleitungsmodul (23), welches mit den Sende-/Empfangsmodulen (211, 212) und der MAC-Schicht (23) verbunden ist, und um eine Raum-Rangierleitungsoperation an den Ethernet-Dienstsignalen durchzuführen;
**dadurch gekennzeichnet, dass**
die MAC-Schicht (33) dazu dient, die Ethernet-Dienst-signale von dem Raum-Rangierleitungsmodul (23) in zwei Kopien so zu duplizieren, dass eine Kopie zu der Station gesendet wird, während die andere Kopie zu den Übertragungskanälen in dem WDM-Netzwerk über das Raum-Rangierleitungs-modul (23) und die Sende-/Empfangsmodule (211,212) zur kontinuierlichen Übertragung zu Stationen in Abwärtsrichtung des WDM-Netzwerks zurückgeschickt wird.

14. Einrichtung nach Anspruch 13, wobei die MAC-Schicht (33) ferner dazu dient, um die Dienstsignale auszuwählen, welche zu der Station gehören, um entsprechend den MAC-Schicht-Kennungen bzw. -Etiketten in den Ethernet-Dienstsignalen zu empfangen und um andere Dienstsignale von dem Raum-Rangierleitungsmodul (23) ausser Acht zu lassen, welche nicht zu der Station gehören.

15. Einrichtung nach Anspruch 13 oder 14, welche ferner aufweist:
ein Ethernet-Dienstsignale-Verkapselungsmodul (32) und ein Abbildungs/Rahmengebungsmodul (31), welche an das Raum-Rangierleitungsmodul (23)und das Sende-/Empfangsmodul (211, 212) anschlossen sind.

16. Einrichtung zum Verarbeiten von Ethernet-Dienstsignalen in einem Wellenlängenmultiplex-(WDM-)Netzwerk, wobei die Einrichtung für eine Station des WDM-Netzwerks ist und aufweist:
Sende-/Empfangsmodule (211, 212) zum Anschließen an Übertragungskanäle in dem WDM-Netzwerk;
ein lokales Dienstverarbeitungsteil (22) zum Anschließen einer Benutzerseite; und
ein Raum-Rangierleitungsmodul (23), welches mit den Sende-/Empfangsmodulen (211, 212) und einem Netzwerk-Identifiziermodul (41) angeschlossen ist, und zum Durchführen einer Raum-Rangierleitungsoperation an den Ethernet-Dienstsignalen;
**dadurch gekennzeichnet, dass**
das Netzwerk-Identifiziermodul (41) zum Duplizieren der Ethernet-Dienstsignale in zwei Kopien, zum Entfernern der Kennung einer Kopie, zum Senden einer ersten Kopie an das lokale Dienstverarbeitungsteil (22) und zum Rückschicken der anderen Kopie an die Übertragungskanäle in dem WDM-Netzwerk über das Raum-Rangierleitungsmodul (23) und die Sende-/Emfangsmodule (211, 212) zur kontinuierlichen Übertragung an die Stationen in Abwärtsrichtung dient.

17. Einrichtung nach Anspruch 16, wobei das Netzwerk-Identifiziermodul (41) ferner zum Auswählen von Diensten, welche zu der Station gehören, entsprechend zu selbstdefinierten Kennungen bzw. Stationskennungen der Dienstsignale, Abstreifen der Kennungen und Senden der Signale an das lokale Dienstverarbeitungsteil (22) dient.

18. Einrichtung nach Anspruch 16, wobei das lokale Dienstverarbeitungsteil (22) eine MAC-Schicht (33) und eine physikalische Schicht (34) aufweist, wobei die MAC-Schicht (33) zum Empfangen der Ethernet-Dienstsignale von dem Netzwerk-Identifiziermodul (41), zum Auswählen der Dienste, welche zu der Station gehören, um zu empfangen, entsprechend zu den MAC-Schicht-Kennungen in den Ethernet-Dienstsignalen, und zum Außerachtlassen anderer Dienste dient.

19. Einrichtung nach Anspruch 16 oder 18, welche ferner aufweist:
ein Ethernet-Dienstsignal-Verkapselungsmodul (32) und ein Abbildungs/Rahmengebungsmodul (31), welche das Raum-Rangierleitungsmodul (23) und die Sende-/Empfangsmodule (211, 212) anschließen.

## Revendications

1. Procédé pour transmettre des signaux de service Ethernet dans un réseau à Multiplexage par Division de Longueurs d'ondes WDM, comprenant :
un Serveur Central, CS, recevant les signaux de service Ethernet et transmettant les signaux à un canal de transmission du réseau WDM, pour transmission (701) ;
et **caractérisé par** :
une station réceptrice, recevant les signaux de service Ethernet provenant du canal de transmission, accomplissant une opération de brassage à répartition spatiale sur les signaux reçus et dupliquant les signaux en deux copies, dans lequel une copie est extraite localement et l'autre copie est retournée au canal de transmission, pour une transmission continue à des stations aval (702).

2. Procédé selon la revendication 1, dans lequel,
le CS transmet les signaux de service Ethernet en un sens quelconque du canal de transmission ou dans les deux sens du canal de transmission, simultanément ; et
la station réceptrice reçoit les signaux de service Ethernet provenant d'un sens quelconque du canal de transmission ou des deux sens du canal de transmission, simultanément.

3. Procédé selon la revendication 2, comprenant en outre :
la mise en oeuvre par la station d'un commutateur de protection, par commutation des sens de réception et d'émission des signaux de service Ethernet.

4. Procédé selon la revendication 1, dans lequel l'étape de duplication est mise en oeuvre par un module de brassage à répartition spatiale.

5. Procédé selon la revendication 1, dans lequel la duplication est mise en oeuvre par une couche de contrôle d'Accès au média (MAC), selon une étiquette de couche MAC et une table de transmission préconfigurée, ou l'étape de duplication est mise en oeuvre par un module identificateur de réseau selon un identificateur auto-défini, ajouté aux signaux de service Ethernet et à la table de transmission préconfigurée.

6. Procédé selon l'une quelconque des revendications 1 à 5, comprenant en outre le fait :
lorsque le CS reçoit une pluralité de signaux de service Ethernet en même temps,
le CS détermine que les signaux de service Ethernet portent des étiquettes de couche MAC différentes, respectivement ; informe la station réceptrice au sujet des étiquettes de couche MAC portées dans chaque signal de service Ethernet ; et transmet la pluralité de signaux de service Ethernet au canal de transmission ; et
les stations réceptrices reçoivent la pluralité de signaux de service Ethernet, sélectionnent les signaux appartenant à la station actuelle à partir de la pluralité de signaux de service Ethernet extraits localement, afin de recevoir et d'éliminer les signaux n'appartenant pas à la station actuelle selon les étiquettes de couche MAC.

7. Procédé selon la revendication 6, dans lequel l'étiquette de couche MAC est une étiquette de Réseau Local Virtuel, VLAN, ou une étiquette de commutation multiprotocole par étiquette - Multiple-Protocol Label Switching, MPLS, ou une étiquette pour Anneau de Paquet Résilient - Resilient Packet Ring, RPR.

8. Procédé selon l'une quelconque des revendications 1 à 5, comprenant en outre :
lorsque le CS reçoit la pluralité de signaux de service Ethernet à transmettre à une pluralité de stations réceptrices en même temps,
le CS ajoute un identificateur de la station qui reçoit les signaux de service dans chaque signal de service Ethernet ; informe de façon correspondante chaque station réceptrice de l'identificateur ; et transmet la pluralité des signaux de service Ethernet au canal de transmission, pour transmission ;
la station réceptrice reçoit la pluralité de signaux de service Ethernet, sélectionne les signaux appartenant à la station actuelle parmi la pluralité de signaux de service Ethernet extraits localement, pour recevoir et éliminer les signaux n'appartenant pas à la station actuelle selon l'information d'identificateur; et supprime l'information d'identificateur dans les signaux de la station actuelle.

9. Dispositif pour transmettre de signaux de service Ethernet dans un réseau à Multiplexage par Division de Longueurs d'Ondes, WDM, le dispositif étant prévu pour une station du réseau WDM et comprenant :
des modules d'émission/réception (21), pour connexion à des canaux de transmission dans le réseau WDM ;
une partie de traitement de service local (22), pour connexion à un côté utilisateur ; et
un module de brassage à répartition spatiale (23), connecté aux modules d'émission/réception (21) et à la partie de traitement de service local (23), et pour accomplir une opération de brassage à répartition spatiale sur les signaux de service Ethernet et dupliquer les signaux de service Ethernet ;
**caractérisé en ce que** le module à brassage à répartition spatiale (23) est tel que :
les signaux de service Ethernet ayant été reçus par les modules d'émission/réception (21) depuis le réseau WDM sont dupliqués par le module de brassage à répartition spatiale (23) en deux copies, dans lequel une copie est transmise à la partie de traitement de service local (22) et l'autre copie est retournée aux canaux de transmission dans le réseau WDM pour une transmission continue vers des stations aval du réseau WDM.

10. Dispositif selon la revendication 9, dans lequel la partie de traitement de service local (22) comprend une couche de contrôle d'Accès au média, MAC, (33) et une couche physique (34), dans lequel la couche MAC (33) relie au module de brassage à répartition spatiale (23) et à la couche physique (34), et est prévue pour sélectionner les services appartenant à la station, recevoir de manière correspondante les étiquettes de couche MAC, et éliminer les autres services.

11. Le dispositif selon la revendication 9, comprenant en outre :
un module identificateur de réseau (41), connecté au module de connexion au module de brassage à répartition spatiale (23) et à la partie de traitement de service local (22), et pour ajouter des identificateurs aux signaux de service Ethernet, sélectionner des services qui appartiennent à la station pour recevoir de manière correspondante aux identificateurs ajoutés, et supprimer l'information d'identificateur des signaux de service Ethernet qui appartiennent à la station.

12. Dispositif selon l'une quelconque des revendications 9 à 11, comprenant en outre :
un module d'encapsulation de signal de service Ethernet (32) et un module de mappage/tramage (31) qui connecte le module à brassage à répartition spatiale (23) et le module d'émission/réception (211, 212).

13. Dispositif de traitement de signaux de service Ethernet dans un réseau à Multiplexage par Division de Longueurs d'Ondes WDM, le dispositif étant prévu pour une station du réseau WDM et comprenant :
des modules d'émission/réception (211, 212) pour connexion à des canaux de transmission dans le réseau WDM ;
une couche de contrôle d'Accès au média, MAC, (33), pour connexion à un côté utilisateur ; et
un module de brassage à répartition spatiale (23), connecté aux modules d'émission/réception (211, 212) et à la Couche MAC (33), pour accomplir une opération de brassage à répartition spatiale sur les signaux de service Ethernet ;
**caractérisé en ce que** :
la couche MAC (33) est prévue pour dupliquer les signaux provenant du module de brassage à répartition spatiale (23) en deux copies, de manière qu'une copie soit transmise à la station, tandis que l'autre copie est retournée aux canaux de transmission dans le réseau WDM, par le module de brassage à répartition spatiale (23) et les modules d'émission/réception (211, 212), pour une transmission continue vers des stations aval du réseau WDM.

14. Dispositif selon la revendication 13, dans lequel la Couche MAC (33) est en outre prévue pour sélectionner des signaux de service appartenant à la station, afin d'effectuer une réception selon les étiquettes de couche MAC contenues dans les signaux de service Ethernet, et éliminer les autres signaux de service provenant du module de brassage à répartition spatiale (23), qui n'appartiennent pas à la station.

15. Dispositif selon la revendication 13 ou 14, comprenant en outre :
un module d'encapsulation de signal de service Ethernet (32) et un module de mappage/tramage (31) qui connecte le module à brassage à répartition spatiale (23) et le module d'émission/réception (211, 212).

16. Dispositif de traitement de signaux de service Ethernet dans un réseau à Multiplexage par Division de Longueurs d'Ondes WDM, le dispositif étant prévu pour une station du réseau WDM et comprenant :
des modules d'émission/réception (211, 212) pour connexion à des canaux de transmission dans le réseau WDM ;
une partie de traitement de service local (22) pour connexion au côté utilisateur ; et
un module de brassage à répartition spatiale (23), connecté aux modules d'émission/réception (211, 212) et à un module identificateur de réseau (41), et pour accomplir une opération de brassage à répartition spatiale sur les signaux de service Ethernet ;
**caractérisé en ce que**
le module identificateur de réseau (41) est prévu pour dupliquer les signaux de service Ethernet en deux copies, supprimer l'identificateur d'une copie, envoyer la première copie à la partie de traitement de service local (22), et retourner l'autre copie au canal de transmission dans le réseau WDM, par le module à brassage à répartition spatiale (23) et les modules d'émission/réception (211, 212), pour une transmission continue à des stations aval.

17. Dispositif selon la revendication 16, dans lequel le module identificateur de réseau (41) est en outre prévu pour sélectionner des services appartenant à la station selon des identificateurs auto-définis des signaux de service, supprimer les identificateurs et transmettre les signaux à la partie de traitement de service local (22).

18. Dispositif selon la revendication 16, dans lequel la partie de traitement de service local (22) comprend une couche MAC (33) et une couche physique (34), dans lequel,
la couche MAC (33) est prévue pour recevoir les signaux de service Ethernet venant du module identificateur de réseau (41), sélectionner les services appartenant à la station pour recevoir selon des étiquettes de couche MAC situées dans les signaux de service Ethernet et supprimer les autres services.

19. Dispositif selon la revendication 16 ou 18, comprenant en outre :
un module d'encapsulation de signal de service Ethernet (32) et un module de mappage/tramage (31) connectant au module à brassage à répartition spatiale (23) et aux modules d'émission/réception (211, 212).
